# EUROPÄISCHE PATENTANMELDUNG

(11) **EP 0 696 113 A2**
(43) Veröffentlichungstag der Anmeldung: **07.02.1996**
(21) Anmeldenummer: 95111901.5
(22) Anmeldetag: 28.07.1995
(51) Int. Cl.: H04B 7/06, H04B 7/08, H04Q 7/20, H04M 1/72

(54) **Vorrichtung zum Sicherstellen einer ausreichenden Sprachqualität bei einem System digitaler Schnurlostelefone**

(30) Priorität: 04.08.1994 CH 2439/94
(71) Anmelder: ASCOM BUSINESS SYSTEMS AG, CH-4503 Solothurn (CH)
(72) Erfinder: Mosimann, Dieter, CH-4573 Lohn-Ammansegg (CH)
(74) Vertreter: Schwerdtel, Eberhard, Dr.

(57) **Zusammenfassung**

Das System digitaler Schnurlostelefone umfasst eine Basisstation (23) und mehrere zugeordnete Mobilstationen. In jedem Gesprächsfall wird zwischen der betroffenen Mobilstation und der Basisstation (23) im Sinne der DECT-Norm ein Kanal aufgebaut, indem in einem Raster von insgesamt 24 Zeitschlitzen ein Zeitschlitz-Paar ausgewählt wird zum periodischen Austausch von Paketen. Hierzu dienen in der Basisstation (23) eine Antenne (65), eine an diese angeschlossene Empfangseinheit (62) und eine Sendeeinheit (66) sowie eine Schaltereinheit (64) mit zugeordneter Steuerung (63). Zusätzlich kommen nun hierzu eine abgesetzte, zweite Antenne (28) und ein Antennenschalter (68). Dieser Aufbau erlaubt den Unterhalt von jeweils zwei parallelen Kanälen zu jeder Mobilstation, wobei auf jedem dieser Kanäle die gleiche Information übertragen wird. Durch ständiges Vergleichen der Übertragungsqualität beider Kanäle ist es möglich, den jeweils besseren der Kanäle für die Informationsübermittlung zu verwenden, während die Information des jeweils anderen Kanals vernichtet wird.

## Beschreibung

Die Erfindung betrifft eine Vorrichtung zum Sicherstellen einer ausreichenden Sprachqualität bei einem System digitaler Schnurlostelefone entsprechend dem Oberbegriff von Anspruch 1.

Systeme digitaler Schnurlostelefone sind bekannt, beispielsweise solche, die nach der DECT-Norm (Digital European Cordless Telecommunications) arbeiten. Bei einem solchen System verkehrt eine an das allgemeine Netz angeschlossene Basisstation über Funkkanäle mit einer Mehrzahl zugeordneter Handgeräte, die durch die benutzenden Personen im Arbeitsbereich des Systems frei verschiebbar sind. Die Funkkanäle werden jeweils und von Fall zu Fall aus einem Paar von insgesamt zweimal zwölf Zeitschlitzen und einer von zehn Übertragungsfrequenzen nach einem speziellen Prozedere aufgebaut.

Ein solches System besitzt im allgemeinen einen sicheren Arbeitsbereich. Innerhalb der Grenzen dieses Arbeitsbereiches kann im Bedarfsfall praktisch stets ein Kanal zwischen der Basisstation und jedem der Handgeräte aufgebaut und unterhalten werden, der allen Qualitätsansprüchen genügt. Dies bedeutet, dass der Benutzer jederzeit mit der heute gewohnten Qualität beliebig telefonieren kann.

Die Grösse des sicheren Arbeitsbereiches kann nun kleiner sein, als der Benutzer gemeinhin annimmt. Als Beispiel sei ein Stockwerk eines grösseren Gebäudes genannt, bei dem durch ungünstige bauliche Bedingungen, z.B. einen metallischen Aufzugschacht, Schattenbereiche gegeben sind. In solchen Bereichen sinkt die Feldstärke der 〈schnurlosen〉 Kanäle so weit ab, dass die Sprachqualität leidet bzw. nur noch ungenügend gegeben ist. Für den Benutzer ist die Gegebenheit, innerhalb geringer Distanzen u.U. mit wesentlich veränderten Empfangsbedingungen konfrontiert zu werden, unbefriedigend, da seine Bewegungsfreiheit hierdurch deutlich eingeschränkt wird.

Bei zellularem Aufbau eines Systems digitaler Schnurlostelefone mit zwei oder mehr Basisstationen können die Zellen so klein und die Standorte der Basisstationen derart gewählt werden, dass der gesamte vom Benutzer begehbare Bereich als sicherer Arbeitsbereich gelten kann. In einem solchen System tritt damit der Fall unbefriedigender Empfangsbedingungen weniger auf. Diese Gegebenheit wird jedoch mit erheblichem technischen - und damit verbundenem finanziellen - Aufwand erkauft, da ein zellulares System entscheidend komplexer ist als ein System mit nur einer einzigen Basisstation.

Ausgehend vom genannten Stand der Technik ist es die Aufgabe der Erfindung, eine Methode anzugeben, wie im Umfeld des genannten, sicheren Arbeitsbereiches mit relativ einfachen Mitteln eine Randzone geschaffen werden kann, in der trotz erheblich reduzierter Empfangsbedingungen für den Benützer befriedigende Telefonie-Gegebenheiten bestehen. Diese Randzone kann damit den sicheren Arbeitsbereich eines Systems von Schnurlostelefonen mit einer einzigen Basisstation so erweitern, dass die Benützer im gesamten, ihnen zugänglichen Gelände ausreichende Bedingungen für telefonische Verbindungen vorfinden.

Die Lösung dieser Aufgabe ist durch den kennzeichnenden Teil von Anspruch 1 gegeben. Die abhängigen Ansprüche geben Ausgestaltungen der Erfindung an.

Im folgenden wird die Erfindung anhand von vier Figuren beispielsweise näher beschrieben. Es zeigen:
- Fig. 1: - Grundriss eines Stockwerkes in einem Fabrikgebäude,
- Fig. 2: - Übertragungsschema entsprechend der DECT-Norm,
- Fig. 3: - Blockschaltbild einer Mobilstation,
- Fig. 4: - Blockschaltbild einer Basisstation.

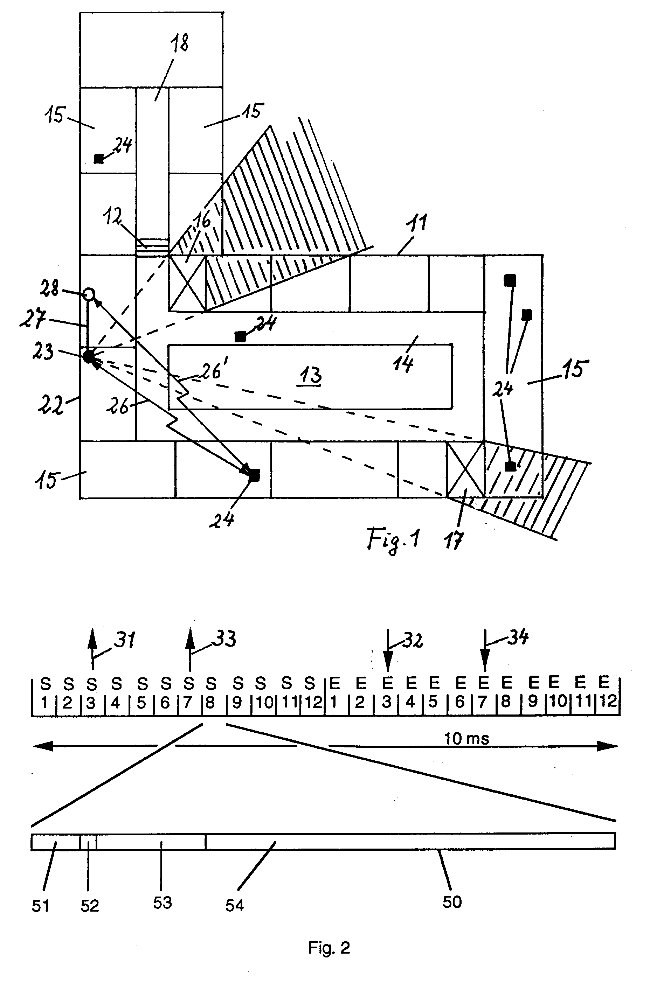

Fig. 1 zeigt den Grundriss eines L-förmigen Gebäudes 11 älterer Bauart, z.B. ein Fabrikgebäude. Das gezeigte beispielsweise Stockwerk liegt auf zwei unterschiedlichen Niveaus, die über eine Treppe 12 mit drei Stufe miteinander verbunden sind. Das Gebäude 11 besitzt im grösseren Flügel einen offenen Innenhof 13, zu dem ein ringförmiger Gang 14 hinweist. Die diversen zugeordneten Räume 15 sowie zwei Liftschächte 16, 17 weisen nach aussen. An die Treppe 12 schliesst ein weiterer, sackförmiger Gang 18 an, der ebenfalls von aussen liegenden Räumen 15 umgeben ist.

Im beschriebenen Stockwerk ist ein System von digitalen Schnurlostelefonen installiert. Die einzige Basisstation 23 ist an einer Aussenwand 22 so montiert, dass das gesamte Stockwerk optimal von dieser Station 23 funktechnisch erfasst wird. Die zugeordneten Mobilstationen 24 sind im gesamten Bereich des Stockwerks frei verschiebbar. Eine bestehende Sprachverbindung zwischen der Basisstation 23 und einer Mobilstation 24 ist als geknickter Pfeil 26 dargestellt. Schraffiert sind die Bereiche des Stockwerks, die in ihrer Empfangsqualität wesentlich beeinträchtigt sind, z.B. durch die mit Metallwänden versehenen Liftschächte 16 und 17.

Fig. 2 zeigt das der DECT-Norm entsprechende Schema für die Übertragung zwischen einer Basisstation 23 und einer Mobilstation 24. Im Wiederholungsrhythmus von 10 ms folgen sich vierundzwanzig Zeitschlitze. Von diesen sind die ersten zwölf (S1 bis S12) für die eine Übertragungsrichtung und die zweiten zwölf (E1 bis E12) für die andere Übertragungsrichtung bestimmt. Jedem Zeitschlitz ist ein Paket 50 zugeordnet, das sich aus einem Synchronisierungsteil 51, Zeichen 52 zur Spezifikation der Steuerdaten, eigentlichen Steuerdaten 53 und den zu übertragenden Sprachdaten 54, d.h. den Nutzdaten bzw. der übertragenen Information zusammensetzt. Damit bildet das DECT-Verfahren eine spezielle Art von Zeitmultiplex-Übertragung, wobei jedes Paket auf einer von zehn möglichen Übertragungsfrequenzen übertragen wird. Jede Duplex-Sprachverbindung benötigt ein Zeitschlitz-Paar, was als Kanal bezeichnet wird.

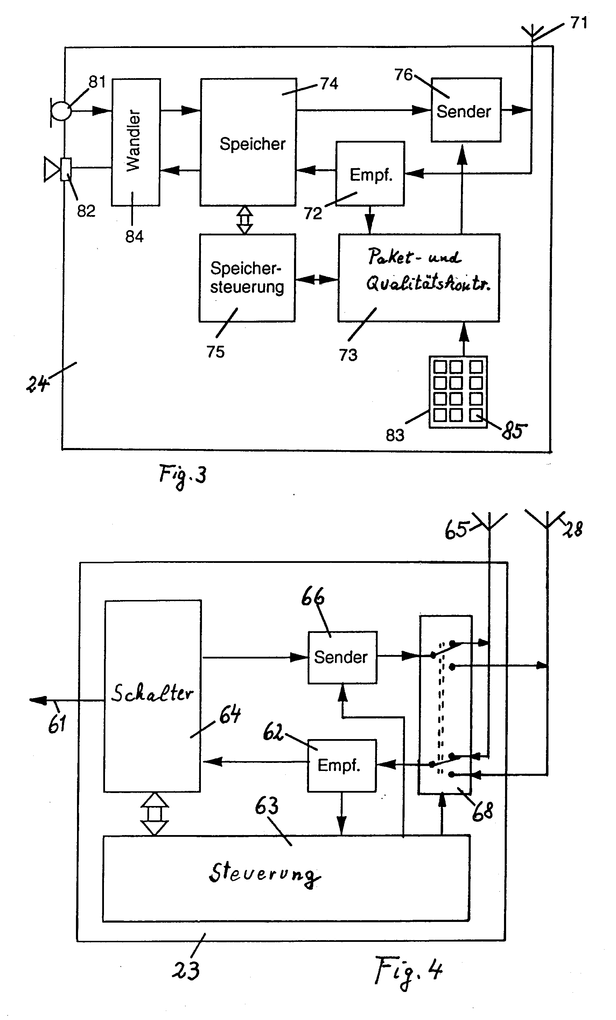

Jede Sprachverbindung 26 zwischen der Basisstation 23 und einer Mobilstation 24 benötigt einen Kanal. Dieser Kanal bietet je nach der räumlichen Lage der Mobilstation 24 aus dem beschriebenen Grund unterschiedlich gute Kommunikationsqualität. Diese Qualität kann sich räumlich sehr abrupt ändern - wie beschrieben. Es wird daher eine zweite Antenne 28 für die Basisstation 23 vorgesehen, wobei der Abstand der Leitung 27 zwischen der zweiten Antenne 28 und der Basisstation 23 wenige Zentimeter, z.B. 8 cm bis einige Meter beträgt. Weiter werden in den Mobilstationen 24 und in der Basisstation 23 Mittel vorgesehen, die es erlauben, gleichzeitig nebeneinander zwei Kanäle 26, 26' zwischen diesen Stationen zu betreiben. Jeder der beiden Kanäle 26, 26' sendet grundsätzlich Pakete mit dem jeweils gleichen Inhalt des Sprachdatenbereichs 54. Jeder der beiden Kanäle 26, 26' verläuft aber über eine andere der beiden Antennen 28, 65 (Fig. 4) der Basisstation 23.

Eine ungenügende Verbindung macht sich nun dadurch bemerkbar, dass in den übertragenen Paketen 50 immer wieder einzelne Bitfehler auftreten. Diese Bitfehler stören alle Bereiche 51 - 54. Bitfehler der Sprachdaten 54 führen über die Dekodierung zu zum Teil massiven Verzerrungen der regenerierten, analogen Sprachsignale. Dies macht sich z.B. durch Knackgeräusche und verminderte Sprachverständlichkeit bemerkbar.

Es ergeben sich nun mit erheblicher Wahrscheinlichkeit auf dem jeweils einen der beiden parallelen Kanäle 26, 26' bessere Übertragungsverhältnisse als auf dem anderen Kanal 26', 26. Hierdurch ist es möglich, den jeweils günstigeren der parallelen Kanäle 26, 26' auszuwählen und favorisiert zu betreiben. Als Nachteil ergibt sich hierbei eine erhöhte Belegung der vorhandenen zwölf Kanäle, was jedoch bis auf relativ seltene Zeiten von Spitzenbelegungen vertretbar ist.

Im Schema von Fig. 2 ist dies durch Pfeile 31 - 34 beispielsweise dargestellt. Hierbei symbolisieren die Pfeile 31, 32 im dritten S3 bzw. fünfzehnten Zeitschlitz E3 den einen Kanal 26, die Pfeile 33, 34 im siebten S7 bzw. neunzehnten Zeitschlitz E7 den parallelen Kanal 26'.

Fig. 3 zeigt den Aufbau einer Mobilstation 24 in Form eines Blockschaltbildes. Die Mobilstation 24 umfasst eine Antenne 71, eine Empfangseinheit 72, eine Paket- und Qualitätskontrolleinheit 73, einen Speicher 74 mit zugeordneter Speichersteuerung 75 und eine Sendeeinheit 76. Hierzu kommen als Mensch/Maschine-Schnittstellen eine Eingabetastatur 83, eine Sprechkapsel 81 und eine Hörkapsel 82 sowie ein zugeordneter AD/DA-Wandler 84.

Die über die Antenne 71 ankommenden Pakete der beiden Kanäle 26, 26' werden durch die Empfangseinheit 72 empfangen und synchronisiert und durch die Paket- und Qualitätskontrolleinheit 73 bezüglich ihrer Zeichen 52, Steuerdaten 53 und Sprachdaten 54 gelesen. Die Pakete werden sodann, gesteuert durch die Speichersteuerung 75 in den Paketspeicher 74 zur Zwischenspeicherung eingelesen und zur gegebenen Zeit wieder ausgelesen. Dieses Auslesen erfolgt bei guter Übertragungsqualität sofort über den AD/DA-Wandler 84 zur Hörkapsel 82, z.B. für alle Pakete des einen Kanals 26. Es entsteht hierdurch in gewohnter Weise ein Sprachstrom, der vom Benutzer empfangen wird. Die Pakete des parallelen Kanals 26' werden vernichtet.

In der umgekehrten Richtung werden die akustischen Signale des Sprechkapsel 81 im AD/DA-Wandler 84 digitalisiert, im Speicher 74 zwischengespeichert und dann zu Paketen ergänzt über die Sendeeinheit 76 und die Antenne 71 zweimal zur Basistation 23 gesandt, d.h. einmal über den Kanal 26 und einmal über den Kanal 26'

Bei ungenügender Übertragungsqualität entscheidet die Paket- und Qualitätskontrolleinheit 73, welcher Kanal 26 oder 26' die besseren Pakete liefert. Diese Einheit 73 kann hierzu verschiedene Strategien anwenden und/oder kann von aussen gesteuert werden. Im letzteren Fall betätigt der Benutzer bei einer ihm unbefriedigend erscheinenden Sprachqualität manuell eine Taste 85, wodurch die Einheit 73 in der Folge die Pakete des jeweils anderen Kanals 26 bzw. 26' zum Speicher 74 durchschaltet. Ist der Benutzer mit der Wirkung einverstanden, dann verbleibt die Paket- und Qualitätskontrolleinheit 73 im gewählten Zustand. Ist er nicht zufrieden, kann er nochmals umschalten bzw. zurückschalten oder muss seinen Standort wechseln.

Die Paket- und Qualitätskontrolleinheit 73 kann jedoch auch automatisch den geeigneteren der beiden parallelen Kanäle 26, 26' auswählen. Hierzu kann im Grunde jede Methode zur Qualitätsbeurteilung eingesetzt werden. Eine erste solche Methode besteht z.B. im Vergleich der Empfangsfeldstärken beider Kanäle 26, 26'. Hierbei dient laufend die jeweils grössere Feldstärke an einem Feldstärkemesser zur Bestimmung des bevorzugten Kanals 26 bzw. 26'.

Eine andere Methode vergleicht laufend die Pakete beider Kanäle 26, 26' und bestimmt aufgrund von Fehleranalysen, welcher Kanal mehr gestört ist. Hierbei kann im notwendigen Sprachqualitätsmesser beispielsweise ein Fuzzy-Logik eingesetzt werden. Die Paket- und Qualitätskontrolleinheit 73 schaltet dann jeweils die Pakete des weniger gestörten Kanals 26 bzw. 26' durch. Eine dritte Methode verwendet CRC-Checks zur Beurteilung der Übertragungsqualität.

Der Aufbau und die Funktionsweise der Paket- und Qualitätskontrolleinheit 73, der Speichersteuerung 75 und des Paketspeichers 74 sind im weiteren derart, dass jedes Paket möglichst kurz gespeichert wird. Ideal ist die Weitersendung zum AD/DA-Wandler 84 jeweils innerhalb des Intervals eines einzigen Zeitrahmens von 10 ms. Für die Zwecke der Qualitätsbestimmung kann eine längere Speicherung vorgesehen werden, wobei die Pakete schliesslich nicht mehr an den AD/DA-Wandler 84 weitergegeben sondern vernichtet werden.

Fig. 4 zeigt das Blockschaltbild der Basisstation 23 sowie der zweiten Antenne 28. Die Basisstation 23 ist ähnlich ausgebildet wie die Mobilstationen 24 und umfasst u.a. eine Empfangseinheit 62, eine Sendeeinheit 66, eine Schaltereinheit 64 und eine zugeordnete Steuerung 63. Hierzu kommt ein Antennenschalter 68. Die Schaltereinheit 64 ist nach aussen über eine Telefonanschlussleitung 61 mit dem öffentlichen Telefonnetz oder einem Privatnetz verbunden. Der Antennenschalter 68 ist zwischen die Empfangs- 62 und Sendeeinheit 66 sowie die eigene Antenne 65 und die abgesetzte Antenne 28 eingefügt. Der Antennenschalter 68 wird durch die Steuerung 63 geschaltet, wobei diese Steuerung 63 die Schaltbefehle über die Empfangseinheit 62 erhält.

Die Basisstation 23 ist im Falle eines Gesprächs im Sinne der DECT-Norm über die eine der beiden Antennen 28, 65 mit der jeweiligen Mobilstation 24 verbunden. Sobald diese Mobilstation 24 den Übergang auf den anderen Kanal beschliesst, gibt sie der Basisstation einen entsprechenden Befehl, durch den diese den Antennenschalter 68 umschaltet. Hierdurch wird der alternative Kanal aktiviert.

Für das Zusammenspiel zwischen der jeweiligen Mobilstation 24 und der Baisstation 23 können eine Reihe von verschiedenen Strategien verfolgt werden. Einige von diesen sind nachfolgend aufgelistet:
- Es wird im Sinne der DECT-Norm grundsätzlich nur ein einziger Kanal betrieben. Im Bedarfsfall wird ein weiterer Kanal aufgebaut und nach Prüfung der durch diesen gegebenen Qualität eventuell auf diesen alternativen Kanal umgeschaltet. Dies hat den Vorteil, dass in Zeiten von Spitzenbelegungen stets im wesentlichen alle Kanäle für die beteiligten Teilnehmer zur Verfügung stehen.
- Es wird ein Hauptkanal definiert und betrieben. Es wird weiter ein Stand-by-Kanal definiert, der jedoch nur im Bedarfsfall aktiviert wird. Bei dieser Strategie reduziert sich die Anzahl potentiell benutzbarer Kanäle auf die Hälfte, was in Zeiten starker Belegung zu Problemen führen kann.
- Es werden grundsätzlich zwei gleichberechtigte Kanäle definiert und ständig unterhalten, wobei die Pakete des jeweils einen Kanals benutzt und die Pakete des jeweils anderen Kanals vollständig vernichtet werden. Bei dieser Strategie gelten die gleichen Bedingungen wie bei der vorhergehenden Strategie. Ein Möglichkeit zur Vermeidung von Belegungsengpässen besteht darin, die Methode zur Sicherstellung der Sprachqualität von der Belegungsdichte der vorhandenen Kanäle abhängig zu machen.

Weitere Varianten sind folgende:
- Es können beide Antennen 28, 65 von der Basisstation 23 abgesetzt sein.
- Für die Kanäle 26, 26' werden gleiche oder unterchiedliche Sendefrequenzen verwendet.
- Es wird ein dritter Kanal benützt.
- Es wird auf die zweite Antenne 28 verzichtet. Alle Kanäle laufen über die dann einzige Antenne 65.
- Es wird eine dritte Antenne eingeführt, über die alternativ einer von zwei Kanälen laufen kann.

## Patentansprüche

1. Vorrichtung zum Sicherstellen einer ausreichenden Sprachqualität bei einem System digitaler Schnurlostelefone, wobei das System im Sinne der DECT-Norm aufgebaut ist und eine Basisstation (23) sowie eine Mehrzahl zugeordneter Mobilstationen (24) aufweist, und
wobei im Gesprächsfall zwischen der jeweiligen Mobilstation (24) und der Basisstation (23) ein Kanal (26) belegt ist zum Austauschen von Paketen (50) in periodisch bereitgestellten Zeitschlitzen (S1 - S12, E1 - E12),
gekennzeichnet in der jeweiligen Mobilstation (24) und in der Basisstation (23),
- durch Unterhaltmittel zum gleichzeitigen Unterhalten von wenigstens zwei unterschiedlichen Kanälen (26, 26') zwischen diesen Stationen (23, 24),
- durch Entscheidungsmittel zum Untersuchen und Entscheiden, welcher der unterhaltenen Kanäle (26, 26') der für den Paketaustausch jeweils geeignetste ist, und
- durch Schaltmittel zum Durchschalten der in den Paketen (50) des geeignetsten Kanals (26, 26') enthaltenen Information im Sinne der DECT-Norm und zur Eliminierung der Pakete (50) der übrigen Kanäle (26, 26').

2. Vorrichtung nach Anspruch 1,
dadurch gekennzeichnet,
dass der Basisstation (23) und den Unterhaltmitteln für jeden unterhaltenen Kanal (26, 26') eine separate Antenne (28, 65) zugeordnet ist.

3. Vorrichtung nach Anspruch 2,
dadurch gekennzeichnet,
dass die Antennen (28, 65) gleich sind und einen Abstände aufweisen, die zwischen wenigen Zentimetern und einigen Metern betragen.

4. Vorrichtung nach Anspruch 1,
dadurch gekennzeichnet,
dass Unterhaltmittel vorgesehen sind zum gleichzeitigen Unterhalten von zwei unterschiedlichen Kanälen (26, 26').

5. Vorrichtung nach Anspruch 1,
dadurch gekennzeichnet,
dass die Entscheidungsmittel unter Verwendung eines Feldstärkemessers aufgebaut sind für die Ermittlung der Empfangsfeldstärken der unterhaltenen Kanäle (26, 26').

6. Vorrichtung nach Anspruch 1,
dadurch gekennzeichnet,
dass die Entscheidungsmittel unter Verwendung wenigstens eines Sprachqualitätmessers aufgebaut sind.

7. Vorrichtung nach Anspruch 1,
dadurch gekennzeiehnet,
dass die Entscheidungsmittel eine Fuzzy-Logik umfassen.

8. Vorrichtung nach Anspruch 1,
dadurch gekennzeichnet,
dass die Entscheidungsmittel einen manuell betätigbaren Schalter (85) umfassen.

9. Verfahren zum Sicherstellen einer ausreichenden Sprachqualität bei einem System digitaler Schnurlostelefone, wobei das System im Sinne der DECT-Norm aufgebaut ist und eine Basisstation (23) sowie eine Mehrzahl zugeordneter Mobilstationen (24) aufweist, und
wobei im Gesprächsfall zwischen der jeweiligen Mobilstation (24) und der Basisstation (23) ein Kanal (26) belegt ist zum Austauschen von Paketen (50) in periodisch bereitgestellten Zeitschlitzen (S1 - S12, E1 - E12),
dadurch gekennzeichnet,
dass zwischen der Basisstation (23) und der jeweiligen Mobilstation (24) im Gesprächsfall wenigstens zwei unterschiedliche Kanäle (26, 26') unterhalten werden, dass untersucht und entschieden wird, welcher dieser Kanäle (26, 26') die jeweils beste Verständlichkeit auf der Seite der Mobilstation (24) liefert,
dass derjenige Kanal (26, 26') als aktiver Kanal ausgewählt wird, der als der beste bewertet wurde, und dass die jeweils anderen Kanäle (26, 26') inaktiviert werden.

10. Verfahren nach Anspruch 9,
dadurch gekennzeichnet,
dass die beste Verständlichkeit subjektiv vom Teilnehmer ermittelt wird, und
dass der jeweilige aktive Kanal (26, 26') durch manuelle Betätigung einer Taste (85) ausgewählt wird.

11. Verfahren nach Anspruch 9,
dadurch gekennzeichnet,
dass die beste Verständlichkeit automatisch ermittelt und der jeweilige aktive Kanal (26, 26') entsprechend automatisch ausgewählt wird.

12. Verfahren nach Anspruch 11,
dadurch gekennzeichnet,
dass die nicht als aktiver Kanal (26, 26') ausgewählten, inaktivierten Kanäle nur potentiell aufrecht erhalten werden mit der Option, im Bedarfsfall wieder aktiviert zu werden.

13. Verfahren nach Anspruch 11,
dadurch gekennzeichnet,
dass die nicht als aktiver Kanal (26, 26') ausgewählten, inaktivierten Kanäle voll aufrechterhalten werden.
